# EUROPEAN PATENT APPLICATION

(11) **EP 0 521 507 A2**
(43) Date of publication of application: **07.01.1993**
(21) Application number: 92111235.5
(22) Date of filing: 02.07.1992
(51) Int. Cl.: G06K 9/36

(54) **Fingerprint data processing method**

(30) Priority: 04.07.1991 JP 190590/91; 04.07.1991 JP 190592/91
(71) Applicant: YOZAN INC., Tokyo 155 (JP); SHARP KABUSHIKI KAISHA, Osaka 545 (JP)
(72) Inventor: Nakajima, Tatsushi, Abeno-ku, Osaka 545 (JP)
(74) Representative: Grünecker, Kinkeldey, Stockmair & Schwanhäusser Anwaltssozietät

(57) **Abstract**

The present invention has the object to provide a fingerprint data processing method possible to calculate easily the significant reference point of a fingerprint image, and distinguish and reduce a false end point generated around the frame of an image on inputting a fingerprint.

The steps for calculating the reference point is: i) binarizing a fingerprint image, ii) scanning the binarized image in two directions and counting edges of ridges crossing scan line, iii) calculating distribution of a value counted in ii), as well as calculating a maximal value in both directions among peaks with distribution equal to or more than a predetermined value, iv) settling cross points of the maximal value as a reference point.

The steps for distinguishing and reducing the false end point is: i) binarizing a fingerprint image, ii) generating an image in which ridges are fused by expanding the binarized image, iii) scaling down the contour by shrinking the fused image, iv) inputting minutiae of an original image using the image generated by the steps from i) to iii) as a mask.

## Description

### FIELD OF THE INVENTION

The present invention relates to fingerprint verification, especially to a method for extracting a reference point of a fingerprint image, as well as minutiae input method.

### BACKGROUND OF THE INVENTION

A fingerprint verification method using the characteristics of minutiae (an end point and a branch point) is substantiated by a lot of data and appraised the reliability of data. But the precise input of minutiae is prerequisite for the method. It means that verification depends on the quality of fingerprint image. A fingerprint image inputted through a camera etc. usually does not consist total fingerprint, that is, a partial image of a fingerprint. End points are generated at the points where ridges are cut by the periphery of the image. As the end point is not the one of minutiae, it should be distinguished from the characteristics of minutiae. It has not been known an established method for the distinguishment.

On the minutiae network method, which part of a fingerprint image is to be the object for the comparison is an important problem because the difference of the object area causes worse result of the verification. Therefore, in many cases, the center of a fingerprint image is adopted as the reference point of the object area. But actually, the concept of the center point is not defined yet.

### SUMMARY OF THE INVENTION

The present invention has the object to provide a fingerprint data processing method which can distinguish and reduce a false end point generated around the frame of the image on inputting minutiae of a fingerprint image.

The present invention has another object to provide a fingerprint data processing method for extracting a reference point which can easily be calculated.

According to the present invention, inputted fingerprint image is swelled and then shrunk so that a flat area smaller than the original fingerprint image. The flat image is used as a mask for extracting significant area of the fingerprint image to be examined.

It is possible to reduce the false end points around the frame of an image and to input only real minutiae by the present invention.

According to the present invention, a reference point is extracted from a distribution of number of cross points where each scan line crosses edge of a configuration area adjacent to an background area. The maximal peak of the distribution is deemed as the reference point.

### BRIEF DESCRIPTION OF THE DRAWINGS

Figure 1 shows a flow-chart of an embodiment of a fingerprint data processing method according to the present invention.

Figure 2 shows a concept of the process for generating mask by the same embodiment.

Figure 3 shows the concept of the cross point of scan line and ridge in an embodiment of the present invention.

Figure 4 shows a graph of distribution in Y-direction in the embodiment.

Figure 5 shows a graph of cross points including a sharp peak.

Figure 6 shows a graph of cross points including minute concavity and convexity.

### PREFERRED EMBODIMENT OF THE PRESENT INVENTION

Hereinafter, an embodiment of the fingerprint data processing method according to the present invention is described with reference to the attached drawings.

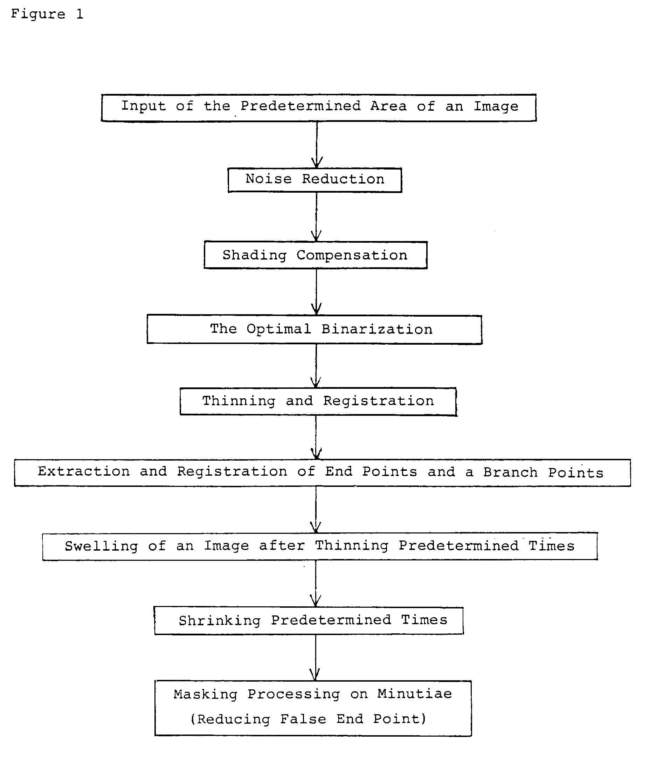

In Figure 1, a fingerprint image is input by a well-known method such as total reflection method on step 1-1, and noise is reduced by median-filter and so forth on step 1-2. The image of ridge made to be clear by performing shading compensation on step 1-3 and binarization into the optimal value on step 1-4. The ridge is executed thinning and the image after thinning is recorded on step 1-5. Extracting end points and branch points from the image performed thinning, the image is recorded in a memory on step 1-6.

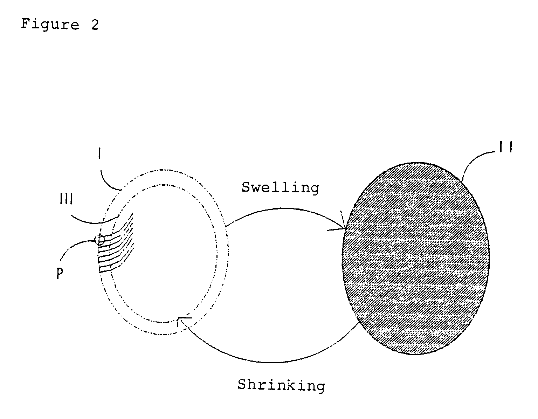

Swelling the image performed thinning on step 1-5 predetermined times, the ridges are fused on step 1-7. Figure 2 shows image I performed thinning in which false end point "P" is generated around the frame of the image, and image II performed swelling and fused on an image already performed thinning. Image II completely covers image I: therefore, image II comprises all the ridges and minutiae.

Here, image II is performed shrinking predetermined times on step 1-8. As shown in Figure 2, shrunk image III is smaller than image I performed thinning. It does not include the area around the frame of image I. It means that the image removed the area around the frame can be extracted from image I by using image III as a mask image.

The number of times of swelling on step 1-7 and shrinking on step 1-8 is determined by experience according to the size of the image and resolution, and an effective mask is surely generated in the necessary time in the minimum. It is also possible to ascertain the completion of the fuse according to the decrease of the change of area by calculating the area every time on every swelling. The completion of shrinking can be ascertained by the steps of i) calculating Feret's diameter of the masked image, ii) comparing the Feret's diameter of image I, iii) seeing and judging the completion according to the decrease ratio of Feret's diameter comparing the Feret's diameter of image I.

As described, false end points are surely reduced and precise minutiae network can be generated because the mask with the size reduced the area around the frame of the image performed thinning on an original image is generated.

Another embodiment is shown in Figure from 3 to 6, with respect to the reference point extraction.

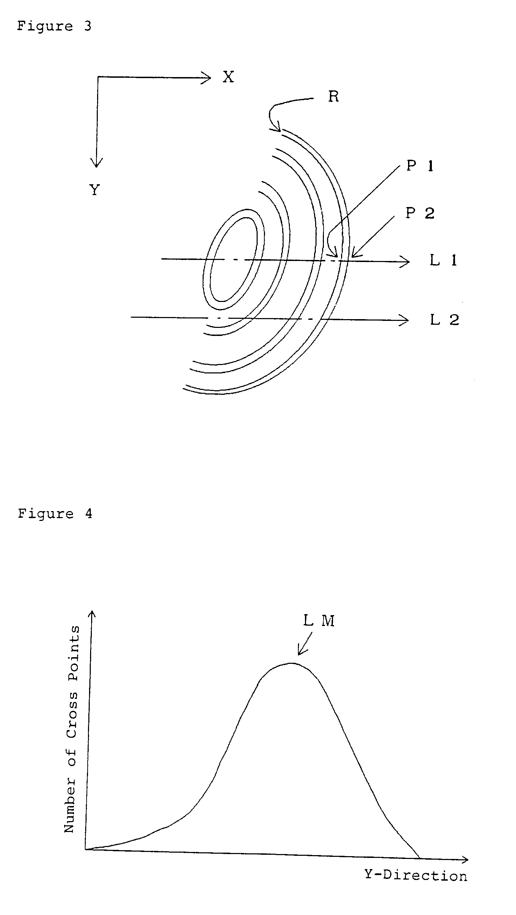

Figure 3 shows a fingerprint image as a model. Ridge "R" is shown by a configuration brightness ("1", for example), and other parts are shown by background brightness ("0", for example). Such processings of noise reduction, shading compensation, calculation of the optimal threshold are performed in order to obtain the binary image. Scanning the fingerprint image in X and Y directions, the cross points of the scan line and the ridges are obtained. In the Figure 1, two of scan lines "L1" and "L2" are shown.

There are two patterns of ridges, arch-type and whorl-type. As for arch-type, it is obvious by experiments that around the center part appears in the distribution of "cross points" though the exact center is not clear in the image. The cross point of the edge of ridge "R" and scan line is adopted the "cross points" here. Therefore, the representative value of the number of ridges can be obtained directly from a binary image without thinning ridges and the processing can be performed in high speed.

The points on which the brightness changes from background brightness to configuration brightness and that changes in reverse can be the edge of a ridge. One of them or both of them can be adopted for finding and judging the edge of a ridge. When both of them are adopted, the number of ridges through which each scan line passes across is twice as the number of edge above. The characteristics of the distribution of the number of edges is equivalent to that of the ridges.

The number of cross points of a scan line and a ridge tends to distribute as shown in Figure 4. It makes a peak around the center of a fingerprint. The coordinates of the maximal value "LM" in the both directions of X and Y is settled as a reference point.

When a plural number of peaks appears as shown in Figure 3, the maximal one in the peak with equal to or more than the predetermined distribution is calculated.

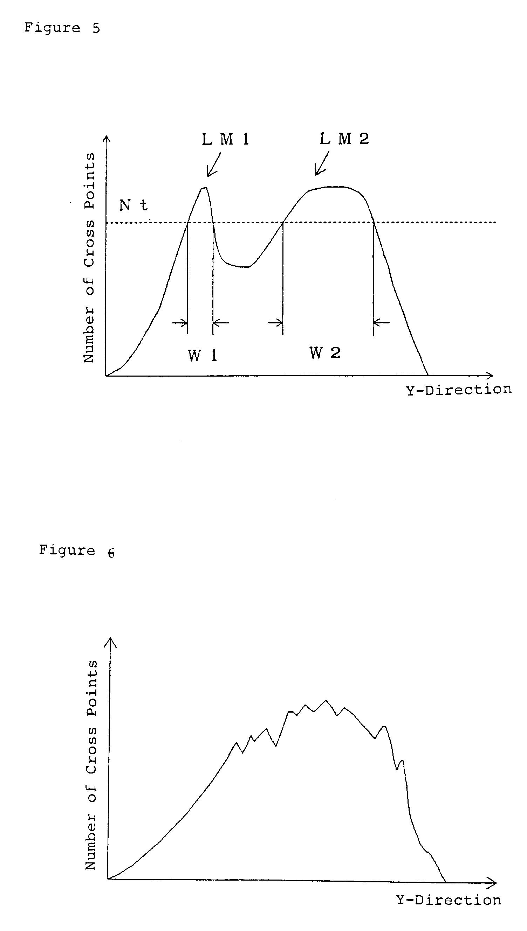

In Figure 5, there are two peaks: the sharp peak of LM1 and the wider peak of LM2 with smaller value than the peak value of LM1. When the distribution of LM1 is less than the predetermined value, LM2 is adopted as the reference value. Here, the distribution is judges by the width of peak W1 and W2 by cutting the peak with threshold "Nt". In this way, the difference of the reference point caused noise can be prevented by ignoring the peak with narrow distribution.

Figure 6 shows a peak with another type of noise, which comprises a lot of minute convexity and concavity. In this case, the maximal value if to be judged after smoothing correcting the graph as shown by broken line.

As described, the processing is high speed because the cross points of an edge of ridge and a scan line is counted. It is possible to prevent the generation of difference of the reference point caused by noise because only the peak with equal to or more than the predetermined distribution is adopted.

According to the present invention, inputted fingerprint image is swelled and then shrunk so that a flat area smaller than the original fingerprint image. The flat image is used as a mask for extracting significant area of the fingerprint image to be examined. Therefore, it is possible to reduce the false end points around the frame of an image and to input only real minutiae by the present invention. In addition, a reference point is extracted from a distribution of number of cross points where each scan line crosses edge of a configuration area adjacent to an background area. The maximal peak of the distribution is deemed as the reference point. Consequently, the difference of the reference point caused by noise can be prevented.

## Claims

1. A fingerprint data processing method comprising steps of i) binarizing a fingerprint image, ii) scanning said binarized image in two directions and counting edges of ridges crossing each scan line, iii) calculating distribution of a value counted in ii), as well as calculating a maximal value in both directions among peaks with distribution equal to or more than a predetermined value, iv) settling cross points of said maximal value as a reference point.

2. A fingerprint data processing method claimed in Claim 1, further comprising said distribution of counted value.

3. A fingerprint data processing method claimed in Claim 1, wherein a point on which brightness changes from background brightness to configuration brightness is regarded as an edge when a binary image is scanned.

4. A fingerprint data processing method claimed in Claim 1, wherein a point on which brightness changes from configuration brightness to background brightness is regarded as an edge when a binary image is scanned.

5. A fingerprint data processing method comprising the steps of i) binarizing a fingerprint image, ii) generating an image fused ridges by expanding a binary image generated in i), iii) executing scale-down by shrinking the fused image, iv) inputting minutiae of an original image using an image generated by the previous process as a mask.
